# EUROPÄISCHE PATENTSCHRIFT

(11) **EP 3 381 728 B1**
(45) Veröffentlichungstag und Bekanntmachung des Hinweises auf die Patenterteilung: **11.05.2022**
(21) Anmeldenummer: 18156902.1
(22) Anmeldetag: 15.02.2018
(51) Int. Cl.: B60K 1/04, B60K 7/00, B60K 17/04

(54) **RADVORRICHTUNG, INSBESONDERE SMARTWHEELVORRICHTUNG**
WHEEL DEVICE, IN PARTICULAR SMART WHEEL DEVICE
DISPOSITIF DE ROUE, EN PARTICULIER DISPOSITIF DE ROUE INTELLIGENTE

(30) Priorität: 22.03.2017 DE 102017204756
(43) Veröffentlichungstag der Anmeldung: 03.10.2018
(73) Patentinhaber: Robert Bosch GmbH, 70442 Stuttgart (DE)
(72) Erfinder: Yoeruer, Haluk, 68789 St. Leon-Rot (DE); Schillinger, Bertram, 77886 Lauf (DE); Groh, Stefan, 77830 Buehlertal (DE); Baur, Joerg, 76137 Karlsruhe (DE); Paukow, Paul, 76227 Karlsruhe (DE); Lux, Thomas, 77815 Buehl-Weitenung (DE); Lamm, Hubert, 77876 Kappelrodeck (DE); Schroeder, Thomas, 77866 Rheinau (DE); Nonnenmacher, Pierre, 67270 Minversheim (FR); Ruprecht, Ester, 77654 Offenburg (DE); Bolz, Peter, 77815 Buehl (DE); Hammer, Uwe, 83059 Kolbermoor (DE); Pfister, Jochen, 69115 Heidelberg (DE); Bruns, Barbara, 76461 Muggensturm (DE)

(56) Entgegenhaltungen:
- JP-A- H0 775 219
- US-A- 5 771 988
- US-A1- 2010 212 980
- US-A1- 2012 080 934
- US-A1- 2012 083 375
- US-A1- 2012 168 239

## Beschreibung

### Stand der Technik

Es ist bereits eine Radvorrichtung, insbesondere Smartwheelvorrichtung, mit zumindest einer Radfelge, mit einer Antriebsgehäuseeinheit, mit einer Antriebseinheit, die zu einem elektrischen Antrieb der zumindest einen Radfelge vorgesehen ist, vorgeschlagen worden.

Die US 2012/080934 A1 zeigt eine Radvorrichtung.

### Offenbarung der Erfindung

Es wird eine Radvorrichtung vorgeschlagen, insbesondere eine Smartwheelvorrichtung, mit zumindest einer Radfelge, mit einer Antriebsgehäuseeinheit, mit einer Antriebseinheit, die zu einem elektrischen Antrieb der zumindest einen Radfelge vorgesehen ist, wobei die Antriebseinheit zumindest im Wesentlichen in die Antriebsgehäuseeinheit integriert ist, mit einer Anbindungseinheit zur lösbaren Anbindung der Antriebsgehäuseeinheit an einem Fahrzeug und mit einer Energieversorgungseinheit, die zu einer elektrischen Energieversorgung der Antriebseinheit vorgesehen und, insbesondere unverlierbar, mit der Antriebsgehäuseeinheit verbunden ist. Dadurch kann die Radvorrichtung besonders flexibel an unterschiedlichen Fahrzeugen angeordnet und/oder ausgetauscht werden. Ein Ersetzen einer konventionellen Radvorrichtung durch die erfindungsgemäße Radvorrichtung kann vorteilhaft besonders schnell und zuverlässig erfolgen. Unter einer "Radfelge" soll in diesem Zusammenhang insbesondere ein Teil der Radvorrichtung verstanden werden, dass eine Kontaktfläche für einen Laufbelag und/oder für einen Reifen, insbesondere für einen Luftreifen, bildet und/oder den Laufbelag und/oder den Reifen trägt. Insbesondere sind ein Laufbelag und/oder ein Reifen fest und/oder permanent drehfest mit der Radfelge verbindbar. Zudem wird vorgeschlagen, dass die Radvorrichtung eine Sensoreinheit aufweist, die zumindest teilweise in die Anbindungseinheit integriert ist. Dadurch können Kenngrößen besonders zuverlässig erfasst werden. Weiterhin kann die Radvorrichtung besonders kompakt ausgebildet werden. Unter einer "Sensoreinheit" soll in diesem Zusammenhang insbesondere eine Einheit verstanden werden, die dazu vorgesehen ist, zumindest eine Kenngröße, insbesondere eine Schnittstellenkenngröße der Anbindungseinheit, wie beispielsweise eine an der Anbindungseinheit wirkende Kraft und/oder ein an der Anbindungseinheit wirkendes Drehmoment, eine Umgebungskenngröße und/oder eine Betriebskenngröße der Radvorrichtung zu erfassen.

Besonders vorteilhaft ist die zumindest eine Radfelge aus einem Kunststoff und/oder aus einem Metall ausgebildet. Die Antriebsgehäuseeinheit bildet vorzugsweise ein Gehäuse für zumindest die Antriebseinheit aus. Vorzugsweise umschließt die Antriebsgehäuseeinheit einen Motorraum, in dem die Antriebseinheit zumindest im Wesentlichen angeordnet ist. Besonders vorteilhaft ist der Motorraum von einer Umgebung durch die Antriebsgehäuseeinheit hermetisch getrennt und/oder abgedichtet. Die Antriebseinheit umfasst vorzugsweise zumindest einen Elektromotor. Der Elektromotor ist bevorzugt von einem Gleichstrommotor, von einem elektrisch kommutierten Gleichstrommotor oder einem Drehstrommotor gebildet. Unter "integriert" soll in diesem Zusammenhang insbesondere aufgenommen, umschlossen und/oder eingeschlossen verstanden werden. Bevorzugt umfasst die Radvorrichtung genau eine Radfelge. Vorzugsweise ist zumindest ein Bauteil und/oder eine Einheit der Antriebseinheit in die Antriebsgehäuseeinheit integriert.

Die Energieversorgungseinheit ist vorzugsweise zur Speicherung elektrischer Energie vorgesehen. Insbesondere ist die Energieversorgungseinheit zur statischen Speicherung elektrischer Energie durch Ladungstrennung und/oder bevorzugt durch elektrochemische Speicherung elektrischer Energie vorgesehen. Vorteilhaft umfasst die zumindest eine Energieversorgungseinheit zumindest einen Kondensator, einen Superkondensator, einen Bleiakkumulator, einen Lithium-Cobaltdioxid-Akkumulator, einen Lithium-Mangan-Akkumulator, einen Lithium-Polymer-Akkumulator, einen Lithium-Eisen-Phosphat-Akkumulator, einen Lithium-Eisen-Yttrium-Phosphat-Akkumulator, einen Lithium-Luft-Akkumulator, einen Lithium-Titanat-Akkumulator, einen Lithium-Schwefel-Akkumulator, einen Natrium-Nickelchlorid-Akkumulator, einen Natrium-Schwefel-Akkumulator, einen Nickel-Eisen-Akkumulator, einen Nickel-Cadmium-Akkumulator, einen Nickel-Metallhydrid-Akkumulator, einen Nickel-Wasserstoff-Akkumulator, einen Nickel-Zink-Akkumulator, einen Silber-Zink-Akkumulator, einen Zinn-Schwefel-Lithium-Akkumulator, eine Brennstoffzelle und/oder eine Batterie.

Unter "unverlierbar" soll hier insbesondere eine Verbindung von zumindest zwei Elementen verstanden werden, die nicht zerstörungsfrei voneinander trennbar und/oder lediglich unter der Zuhilfenahme von Werkzeugen, wie beispielsweise einem Schraubendreher, einem Gabelschlüssel, einem Außensechskant (Inbusschlüssel), einem Torxschlüssel, einer Säge, insbesondere einer mechanischen Säge usw., und/oder chemischen Trennmitteln, wie beispielsweise Lösungsmitteln usw., voneinander trennbar sind. Die Energieversorgungseinheit kann alternativ auch trennbar mit der Antriebsgehäuseeinheit ausgebildet sein. Insbesondere ist die Radvorrichtung zu einem Ersetzen einer nichtangetriebenen Radvorrichtung eines Fahrzeugs, insbesondere bei einem Umrüsten des Fahrzeugs, vorgesehen. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

In einer weiteren Ausgestaltung der Erfindung wird vorgeschlagen, dass die zumindest eine Radfelge zumindest eine Gehäusewandung der Antriebsgehäuseeinheit ausbildet. Dadurch kann die Radvorrichtung besonders kompakt und gewichtsarm ausgebildet werden. Insbesondere begrenzt die zumindest eine Radfelge den Motorraum in eine Radialrichtung. Die zumindest eine Radfelge ist bevorzugt einteilig und/oder einstückig mit der Gehäusewandung ausgebildet. Zusätzlich wird vorgeschlagen, dass die Radvorrichtung eine Getriebeeinheit umfasst, die zu einer Drehmomentübertragung zwischen der Antriebseinheit und der zumindest einen Radfelge vorgesehen ist, wobei die Radfelge ein Hohlrad der Getriebeeinheit ausbildet. Dadurch kann die Radvorrichtung besonders kompakt und betriebssicher ausgebildet werden. Bevorzugt umfasst die Getriebeeinheit zumindest einen Planetenradsatz.

Ferner wird vorgeschlagen, dass die Anbindungseinheit zumindest ein Anbindungselement umfasst, welches die Antriebsgehäuseeinheit zumindest teilweise umschließt. Dadurch kann eine besonders stabile Anbindung der Radvorrichtung an ein Fahrzeug erzielt werden. Bevorzugt ist das zumindest eine Anbindungselement axial beidseitig mit der Antriebsgehäuseeinheit verbunden. Die Begriffe "axial", "radial", "Axialrichtung" bzw. "Radialrichtung" sollen sich in diesem Zusammenhang insbesondere auf eine Hauptrotationsachse der Radfelge in einem Betrieb beziehen.

Zudem wird vorgeschlagen, dass die Anbindungseinheit zumindest ein plattenförmiges Anbindungselement und/oder zumindest einen Verbindungszapfen umfasst. Dadurch können zumindest in einem Betrieb besonders hohe Betriebskräfte zwischen der Radvorrichtung und dem Fahrzeug übertragen werden. Bevorzugt weist das plattenförmige Anbindungselement eine zumindest im Wesentlichen ebene Kontaktfläche zur Kontaktierung mit dem Fahrzeug auf. Weiterhin vorteilhaft ist das plattenförmige Anbindungselement rechteckig oder rund ausgebildet. Weiterhin vorteilhaft umfasst das plattenförmige Anbindungselement Befestigungsausnehmungen, insbesondere Bohrungen, zur Befestigung am Fahrzeug auf. Besonders vorteilhaft weist der zumindest eine Verbindungszapfen einen runden Querschnitt auf.

Des Weiteren wird vorgeschlagen, dass die Energieversorgungseinheit zumindest im Wesentlichen in die Anbindungseinheit integriert ist. Dadurch kann die Energieversorgungseinheit vorteilhaft besonders groß ausgebildet werden. Weiterhin kann eine Abwärme der Energieversorgungseinheit besonders einfach abgeführt werden. Bevorzugt umfasst die Anbindungseinheit eine Elektronikeinheit zur Steuerung und/oder Regelung der Antriebseinheit und/oder zur Überwachung der Energieversorgungseinheit.

Weiterhin wird vorgeschlagen, dass die Radvorrichtung zumindest einen auf der Radfelge angeordneten Reifen, insbesondere Luftreifen, umfasst, wobei die Energieversorgungseinheit zumindest im Wesentlichen in den Reifen integriert ist. Dadurch kann die Radvorrichtung besonders kompakt ausgebildet werden. Weiterhin vorteilhaft ist die Elektronikeinheit zumindest im Wesentlichen in den Reifen integriert ist. Bevorzugt sind die Radfelge und der Reifen stoffschlüssig miteinander verbunden. Weiterhin vorteilhaft sind die Radfelge und der Reifen formschlüssig und/oder kraftschlüssig miteinander verbunden.

Ferner wird vorgeschlagen, dass die Radvorrichtung eine Getriebeeinheit aufweist, die zu einer Drehmomentübertragung zwischen der Antriebseinheit und der zumindest einen Radfelge vorgesehen ist, wobei die Getriebeeinheit zumindest im Wesentlichen außerhalb eines Motorraums der Antriebsgehäuseeinheit angeordnet ist. Dadurch können vorteilhaft besonders große Betriebskräfte auf die Radfelge übertragen werden.

Weiterhin wird vorgeschlagen, dass die zumindest eine Radfelge einstückig mit zumindest einer Raddeckelwandung der Antriebsgehäuseeinheit ausgebildet ist. Dadurch kann die Radvorrichtung besonders kompakt und belastbar ausgebildet werden. Insbesondere begrenzt die zumindest eine Raddeckelwandung den Motorraums in eine Axialrichtung.

Eine besonders vorteilhafte Anwendung findet die erfindungsgemäße Radvorrichtung an einem Fahrzeug. Das Fahrzeug kann insbesondere einen Rollstuhl, ein Kickelec, ein Kickboard, einen Koffer, eine Babylaufhilfe, einen Rollator, einen Einkaufstrolley, eine Patientengehhilfe, einen Golftrolley, einen Restaurantstrolley, einen Kantinentrolley, einen Logistiktrolley, einen Postwagen, einen Gartentrolley, einen Pflanzkübel, einen Werkzeugwagen, einen Materialwagen, einen Baustellentrolley, eine Schubkarre, eine Mülltonne, ein Kinderspielzeug, ein Einfahrtstor, ein leichtes Elektrofahrzeug (LSEV), ein Dreirad, ein Elektroscooter, ein Elektromotorrad (>2 kW), einen Gabelstabler, einen Staubsaugerroboter, einen Rasenmäherroboter, einen Logistikroboter, einen Schwimmbadreinigungsroboter, einen Agrarroboter, einen Viehzuchtroboter, einen Minensuchroboter, einen Minenzerstörungsroboter, einen Bodenreinigungsroboter, einen Tankreinigungsroboter, einen Rohrreinigungsroboter, einen Inspektionssystemroboter, einen Wartungsroboter, einen Bau- und Abrissroboter, einen Rettungs- und Sicherheitsroboter, eine mobile Roboterplattform, einen Führungs- und Informationsroboter, eine Schneeräumfahrzeug, ein Schneemobil, ein All Terrain Vehicle (Quad), ein Utility Terrain Vehicle, ein Krankenbett, einen Bollerwagen, einen Kindergartenwagen, einen Schulranzen, einen Einkaufswagen, einen Sackkarren und/oder einen Wäschewagen ausbilden.

Die erfindungsgemäße Radvorrichtung soll hierbei nicht auf die oben beschriebene Anwendung und Ausführungsform beschränkt sein. Insbesondere kann die erfindungsgemäße Radvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind neun Ausführungsbeispiele der Erfindung dargestellt. Die Zeichnung, die Beschreibung und die Ansprüche enthalten zahlreiche Merkmale in Kombination.

Es zeigen:
- Fig. 1: eine erfindungsgemäße Radvorrichtung in einer schematischen Schnittdarstellung,
- Fig. 2: eine Variante der Radvorrichtung nach Figur 1 in einer schematischen Schnittdarstellung,
- Fig. 3: eine weitere Variante der Radvorrichtung nach Figur 1 in einer schematischen, perspektivischen Darstellung,
- Fig. 4: eine weitere Variante der Radvorrichtung nach Figur 1 in einer schematischen, perspektivischen Darstellung,
- Fig. 5: eine weitere Variante der Radvorrichtung nach Figur 1 in einer Vorderansicht,
- Fig. 6: die Variante der Radvorrichtung nach Figur 5 in einer schematischen, perspektivischen Darstellung,
- Fig. 7: eine weitere Variante der Radvorrichtung nach Figur 1 in einer schematischen, perspektivischen Darstellung,
- Fig. 8: ein weiteres Ausführungsbeispiel einer Radvorrichtung in einer schematischen Schnittdarstellung und
- Fig. 9: eine Variante der Radvorrichtung nach Figur 8 in einer schematischen Schnittdarstellung.

### Beschreibung der Ausführungsbeispiele

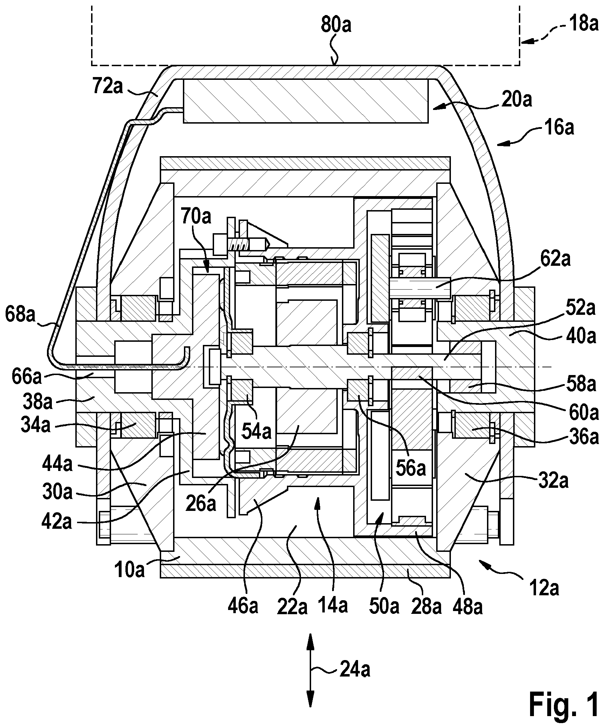

Die Figur 1 zeigt eine Radvorrichtung, insbesondere eine Smartwheelvorrichtung. Die Radvorrichtung umfasst eine Radfelge 10a. Die Radvorrichtung umfasst eine Antriebsgehäuseeinheit 12a. Die Radvorrichtung umfasst eine Antriebseinheit 14a. Die Antriebseinheit 14a ist zu einem elektrischen Antrieb der Radfelge 10a vorgesehen. Die Antriebseinheit 14a ist in die Antriebsgehäuseeinheit 12a integriert. Die Radvorrichtung umfasst eine Anbindungseinheit 16a zur lösbaren Anbindung der Antriebsgehäuseeinheit 12a an einem Fahrzeug 18a. Die Radvorrichtung umfasst eine Energieversorgungseinheit 20a.

Die Energieversorgungseinheit 20a ist zu einer elektrischen Energieversorgung der Antriebseinheit 14a vorgesehen. Die Energieversorgungseinheit 20a ist vorzugsweise unverlierbar mit der Antriebsgehäuseeinheit 12a verbunden. Es ist jedoch auch denkbar, dass die Energieversorgungseinheit 20a abnehmbar an der Antriebsgehäuseeinheit 12a angeordnet ist. Die Antriebsgehäuseeinheit 12a bildet ein Gehäuse für die Antriebseinheit 14a aus. Die Antriebsgehäuseeinheit 12a umschließt einen Motorraum 22a. Die Antriebseinheit 14a ist innerhalb des Motorraums 22a angeordnet. Der Motorraum 22a ist durch die Antriebsgehäuseeinheit 12a hermetisch abgedichtet. Die Antriebseinheit 14a umfasst einen Elektromotor 26a. Der Elektromotor 26a ist von einem elektrisch kommutierten Gleichstrommotor gebildet. Eine Leistungsskalierung erfolgt insbesondere über eine axiale Motorlänge des Elektromotors 26a und/oder zusätzliche Getriebestufen.

Die Radvorrichtung umfasst eine hier nicht näher gezeigte Mensch-Maschine-Schnittstelle. Die Mensch-Maschine-Schnittstelle startet direkt bei einem Initialisieren der Radvorrichtung. Bei einer Inbetriebnahme erlernt die verbaute Radvorrichtung ihre Position in einem Gesamtsystem, insbesondere in Bezug auf weitere Radvorrichtungen. Hierbei kann insbesondere ein Abstand zwischen zumindest zwei Radvorrichtungen zueinander, sowie verschiedene Parametersätze erfasst werden.

Die Mensch-Maschine-Schnittstelle ist zu einer Sprachbefehlerfassung und/oder Sprachbefehlverarbeitung vorgesehen. Beispielsweise ist es denkbar, die Radvorrichtung mittels Sprachbefehlen wie insbesondere "Fahrt geradeaus", "Fahrt rückwärts", "Kurvenfahrt rechts eng", "Kurvenfahrt links eng", "Kurvenfahrt rechts weit", "Kurvenfahrt links weit" zu steuern. Hierbei können Parameter wie insbesondere Fahrstrecke, Motordrehzahl, Geschwindigkeit, Beschleunigung in den einzelnen Radvorrichtungen erfasst werden. Eine Position und/oder ein Abstand zu anderen elektrifizierten Radvorrichtungen im System kann insbesondere mittels Bluetooth oder anderen dem Fachmann als sinnvoll erscheinenden Technologien erfolgen.

Die Radfelge 10a bildet eine Gehäusewandung der Antriebsgehäuseeinheit 12a aus. Die Radfelge 10a begrenzt den Motorraum 22a in eine Radialrichtung 24a. Die Radfelge 10a ist einstückig mit der Gehäusewandung ausgebildet. Die Radfelge 10a ist aus einem Metall hergestellt. Die Radfelge 10a bildet eine Kontaktfläche für einen Laufbelag 28a aus. Der Laufbelag 28a ist hierbei aus einem Vollmaterial ausgebildet. Es ist in diesem Zusammenhang jedoch auch denkbar, dass der Laufbelag 28a einen Luftreifen ausbildet. Der Laufbelag 28a ist zumindest teilweise aus einem Gummimaterial ausgebildet. Die Radfelge 10a ist mit einer speziellen Oberfläche ausgestattet, sodass ein Fügeverfahren formschlüssig über eine strukturierte Oberfläche, kraftschlüssig über spezielle Oberflächenbehandlungen bzw. Beschichtungen und/oder stoffschlüssig über definierte Werkstoffzusammensetzungen insbesondere für Schweißverfahren angewendet werden können. Insbesondere umfasst die Radfelge 10a eine Mikrostrukturierung.

Im Folgenden werden beispielhaft mögliche Verbindungsmöglichkeiten zwischen der Radfelge 10a und dem Laufbelag 28a beschrieben. Der Laufbelag 28a ist über Reibschweißen und/oder Laserschweißen mit der Radfelge 10a verbunden. Alternativ und/oder zusätzlich ist der Laufbelag 28a auf die Radfelge 10a aufgeschrumpft. Alternativ und/oder zusätzlich ist der Laufbelag 28a auf die Radfelge 10a aufvulkanisiert. Es könnte ferner eine Hülse zum Aufvulkanisieren/Aufschweißen des Laufbelags 28a vorgesehen sein. Der Laufbelag 28a ist zumindest in einem Betriebszustand fest mit der Radfelge 10a verbunden. Der Laufbelag 28a ist zumindest in einem Betriebszustand permanent drehfest mit der Radfelge 10a verbunden.

Die Radfelge 10a ist einstückig mit zwei Raddeckelwandungen 30a, 32a der Antriebsgehäuseeinheit 12a ausgebildet. Die Raddeckelwandungen 30a, 32a begrenzen den Motorraum 22a in eine Axialrichtung. Die Radfelge 10a ist mit den zwei Raddeckelwandungen 30a, 32a stoffschlüssig verbunden, insbesondere verschweißt. Die Radfelge 10a kann hierbei mit den zwei Raddeckelwandungen 30a, 32a laserverschweißt oder reibverschweißt werden. Die Radfelge 10a kann alternativ oder zusätzlich mit den zwei Raddeckelwandungen 30a, 32a verlötet, kaltverlötet und/oder verklebt sein. Es ist in diesem Zusammenhang jedoch auch denkbar, dass die Radfelge 10a mit den zwei Raddeckelwandungen 30a, 32a formschlüssig verbunden ist, insbesondere über zumindest eine Schraube, zumindest eine Niete, zumindest einen Bolzen, zumindest eine Verzahnung. Weiterhin ist es denkbar, dass die Radfelge 10a mit den zwei Raddeckelwandungen 30a, 32a kraftschlüssig verbunden ist, insbesondere über eine Pressung.

Die Energieversorgungseinheit 20a ist zur Speicherung elektrischer Energie vorgesehen. Die Energieversorgungseinheit 20a umfasst einen lithiumbasierten Ackumulator. Die Energieversorgungseinheit 20a ist unverlierbar mit der Antriebseinheit 14a verbunden. Die Energieversorgungseinheit 20a ist über ein Kabel 68a mit einer Platine 44a einer Elektronikeinheit 70a elektrisch verbunden. Die Energieversorgungseinheit 20a ist fest mit der Anbindungseinheit 16a verbunden.

Die Radvorrichtung umfasst Radlager 34a, 36a.Über die Radlager 34a, 36a werden radiale Kräfte, insbesondere Kräfte < 4,4 kN, aufgenommen. Über die Radlager 34a, 36a werden axiale Kräfte, insbesondere Kräfte < 60 N, aufgenommen. Die Radlager 34a, 36a sind in den Raddeckelwandungen 30a, 32a eingepasst.

Die Radlager 34a, 36a sind gegen ein Eindringen von Schmutz und/oder Feuchtigkeit abgedichtet. Die Radlager 34a, 36a sitzen auf Radachsbolzen 38a, 40a der Radvorrichtung. Die Radachsbolzen 38a, 40a sind in die Anbindungseinheit 16a eingebaut. Es ist in diesem Zusammenhang jedoch auch denkbar, dass die Radachsbolzen 38a, 40a direkt am Fahrzeug 18a montiert werden (z.B. bei einer Schubkarre).

Einer der Radachsbolzen 38a ist so geformt, dass er alle stehenden Teile der Antriebseinheit 14a gegen Verdrehung sichert. Der Radachsbolzen 38a bildet eine Gehäusehälfte eines Platinengehäuses 42a aus. Die Platine 44a ist nahe der Raddeckelwandung 30a angeordnet. Hierbei können einerseits die Wärme über den Radachsbolzen 38a abgeführt werden und andererseits die elektrische Energie aus der Energieversorgungseinheit 20a der Antriebseinheit 14a zugeführt werden. Der Radachsbolzen 38a und das Platinengehäuse 42a sind einstückig miteinander ausgebildet. Der Radachsbolzen 38a und das Platinengehäuse 42a sind mit einem Motorgehäuse 46a des Elektromotors 26a und einem Getriebehohlrad 48a einer Getriebeeinheit 50a der Radvorrichtung verbunden.

Die Getriebeeinheit 50a umfasst ein Planetengetriebe 86a. Dadurch kann aus der Antriebseinheit 14a ein Drehmoment auf die drehbare Radfelge 10a übertragen werden. Somit ist eine Entkopplung einer äußeren Last vom durch die Antriebseinheit 14a erzeugten Drehmoment vorgesehen. Eine vom Elektromotor 26a antreibbare Motorwelle 52a ist dreifach gelagert: Für eine Ausrichtung eines Rotors ist sie in zwei Lagern 54a, 56a im Motorgehäuse 46a gelagert. Die Motorwelle 52a bildet ein Sonnenrad 60a der Getriebeeinheit 50a aus. Für eine genaue Ausrichtung des Sonnenrads 60a in der Getriebeeinheit 50a ist die Motorwelle 52a über ein Loslager 58a im Radachsbolzen 40a gelagert. Das Loslager 58a bildet ein Nadellager aus.

Der Abtrieb des Drehmoments erfolgt über einen Planetenträger 62a der Getriebeeinheit 50a. Es ist aber auch vorstellbar, dass der Abtrieb über das Getriebehohlrad 48a der Getriebeeinheit 50a erfolgt. Das Getriebehohlrad 48a ist dann mit der Radfelge 10a direkt verbunden und/oder einstückig mit der Radfelge 10a ausgebildet. Alternativ kann das Getriebehohlrad 48a mit zumindest einer der Raddeckelwandungen 30a, 32a direkt verbunden und/oder einstückig mit zumindest einer der Raddeckelwandungen 30a, 32a ausgebildet sein.

Im Antriebssystem kann dann eine Erhöhung der Leistung und/oder des Drehmoments durch eine axiale Verlängerung der aktiven Motorteile oder durch eine Ergänzung um weitere Getriebestufen erfolgen. Die Radvorrichtung umfasst eine Lebensdauerschmierung der Getriebeeinheit 50a. Für Anwendungen, in denen hohe Laufzeiten auftreten, wird die Antriebsgehäuseeinheit 12a teilweise mit Öl befüllt. Das Öl dient zur Schmierung der Zahnräder sowie der Zahnradlagerungen. Außerdem kann es zur besseren Entwärmung der Statorwicklungen des beschriebenen Elektromotors 26a dienen.

Für Anwendungen mit niedrigeren Lebensdauern kann für die Getriebeschmierung auch eine Fettschmierung vorgesehen werden oder die Schmierung kann ganz entfallen. Das Platinengehäuse 42a ist gegen das Eindringen des Öls abgedichtet. Das Motorgehäuse 46a ist gegen das Eindringen des Öls abgedichtet. Für den Fall, dass kein Schmierstoff vorhanden ist, sind Platinen- und/oder Motorgehäuse 42a, 46a zumindest gegen einen Getriebeabrieb abgedichtet. Die Radachsbolzen 38a, 40a sind gegen ausdringendes Öl abgedichtet. Eine für eine Montage offene Kabeldurchführung 66a, in welche ein Kabel 68a zwischen der Platine 44a und der Energieversorgungseinheit 20a verläuft, wird nach der Montage abgedichtet, insbesondere ausgegossen.

Die Anbindungseinheit 16a umfasst ein Anbindungselement 72a. Das Anbindungselement 72a umschließt die Antriebsgehäuseeinheit 12a teilweise. Das Anbindungselement 72a ist axial beidseitig mit der Antriebsgehäuseeinheit 12a verbunden. Das Anbindungselement 72a ist mit den Radachsbolzen 38a, 40a verbunden. Das Anbindungselement 72a ist bereichsweise plattenförmig ausgebildet. Das Anbindungselement 72a bildet einen Bügel aus. Das Anbindungselement 72a weist eine ebene Kontaktfläche 80a zur Kontaktierung mit dem Fahrzeug 18a auf.

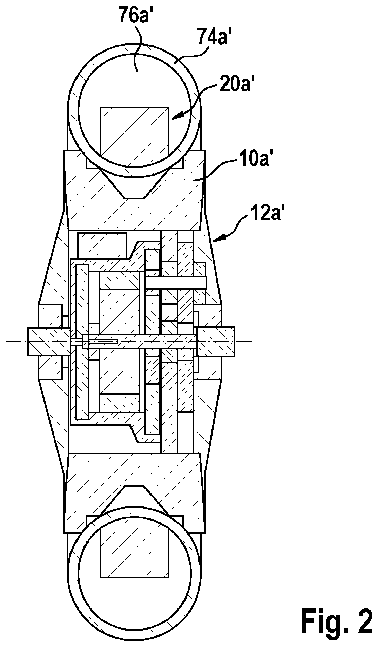

Die Figur 2 zeigt eine Variante der in der Figur 1 gezeigten Radvorrichtung. Im Unterschied zur Figur 1 umfasst die Radvorrichtung einen Reifen 74a'. Der Reifen 74a' bildet einen Luftreifen aus. Der Reifen 74a' ist auf der Radfelge 10a' angeordnet. Die Radfelge 10a' bildet eine Gehäusewandung der Antriebsgehäuseeinheit 12a' aus. Die Energieversorgungseinheit 20a' ist in den Reifen 74a' integriert. Es ist in diesem Zusammenhang auch denkbar, dass die Elektronikeinheit 70a' in den Reifen 74a' integriert ist. Der Reifen 74a' umfasst eine Luftkammer 76a'. Die Energieversorgungseinheit 20a' ist in der Luftkammer 76a' angeordnet.

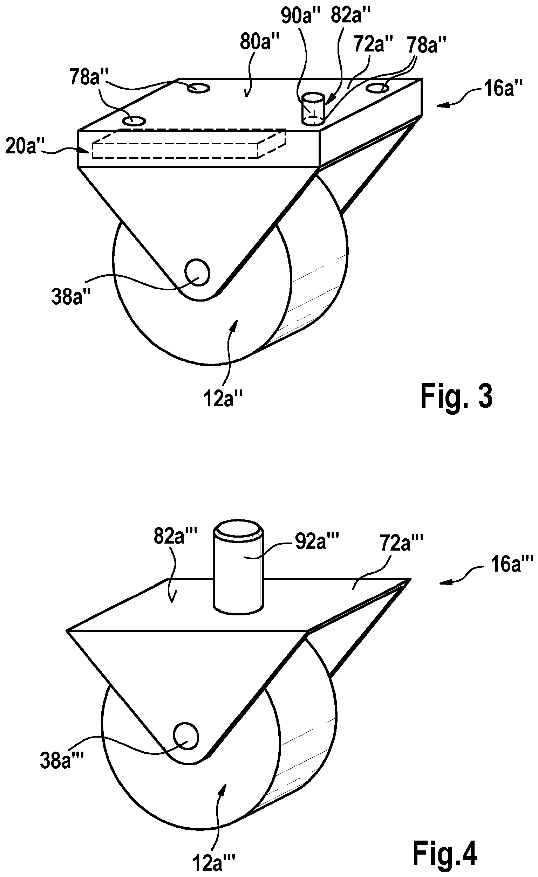

Die Figur 3 zeigt eine weitere Variante der in der Figur 1 gezeigten Radvorrichtung. Die Radvorrichtung umfasst eine Anbindungseinheit 16a". Die Anbindungseinheit 16a" umfasst ein Anbindungselement 72a". Das Anbindungselement 72a" umschließt die Antriebsgehäuseeinheit 12a" teilweise. Das Anbindungselement 72a" ist axial beidseitig mit der Antriebsgehäuseeinheit 12a" verbunden. Das Anbindungselement 72a" ist mit den Radachsbolzen 38a" verbunden. Das Anbindungselement 72a" ist bereichsweise plattenförmig ausgebildet. Das Anbindungselement 72a" bildet einen Bügel aus. Das Anbindungselement 72a" bildet einen Flansch aus. Das Anbindungselement 72a" weist eine ebene Kontaktfläche 80a" zur Kontaktierung mit dem Fahrzeug 18a" auf. Das plattenförmige Anbindungselement 72a" weist vier Befestigungsausnehmungen 78a" auf. Die Befestigungsausnehmungen 78a" sind von Bohrungen gebildet. Die Befestigungsausnehmungen 78a" dienen zu einer Befestigung der Radvorrichtung an einem Fahrzeug (hier nicht gezeigt).

Die Energieversorgungseinheit 20a" ist in die Anbindungseinheit 16a" integriert. Das plattenförmige Anbindungselement 72a" umfasst hierzu einen geschlossenen Aufnahmeraum in dem die Energieversorgungseinheit 20a" angeordnet ist. Ferner weist die Radvorrichtung eine Sensoreinheit 82a" auf. Die Sensoreinheit 82a" ist teilweise in die Anbindungseinheit 16a" integriert. Die Sensoreinheit 82a" umfasst einen bolzenförmigen Kraftsensor 90a". Der Kraftsensor 90a" ist in einer der Befestigungsausnehmungen 78a" angeordnet. Der Kraftsensor 90a" ist insbesondere zu einer Erfassung einer Nutzerkraft vorgesehen. Alternativ oder zusätzlich umfasst die Sensoreinheit 82a" einen Drehmomentsensor, einen Dehnungssensor o. dgl. Es ist denkbar, dass die Sensoreinheit 82a" zumindest einen Kombinationssensor aufweist, der dazu vorgesehen ist, verschiedene Kenngrößen, wie beispielsweise eine Kraft und ein Drehmoment, zu erfassen.

Die Figur 4 zeigt eine weitere Variante der in der Figur 1 gezeigten Radvorrichtung. Die Radvorrichtung umfasst eine Anbindungseinheit 16a‴. Die Anbindungseinheit 16a‴ umfasst ein Anbindungselement 72a‴. Das Anbindungselement 72a‴ umschließt die Antriebsgehäuseeinheit 12a‴ teilweise. Das Anbindungselement 72a‴ ist axial beidseitig mit der Antriebsgehäuseeinheit 12a‴ verbunden. Das Anbindungselement 72a‴ ist mit den Radachsbolzen 38a‴ verbunden. Das Anbindungselement 72a‴ ist bereichsweise plattenförmig ausgebildet. Das Anbindungselement 72a‴ bildet einen Bügel aus. Das Anbindungselement 72a‴ weist eine ebene Kontaktfläche 80a‴ zur Kontaktierung mit dem Fahrzeug 18a‴ auf. Die Anbindungseinheit 16a‴ umfasst einen Verbindungszapfen 92a‴. Der Verbindungszapfen 92a‴ ist insbesondere zu einer Befestigung an einem Rohrende vorgesehen. Der Verbindungszapfen 92a‴ ist zylinderförmig ausgebildet.

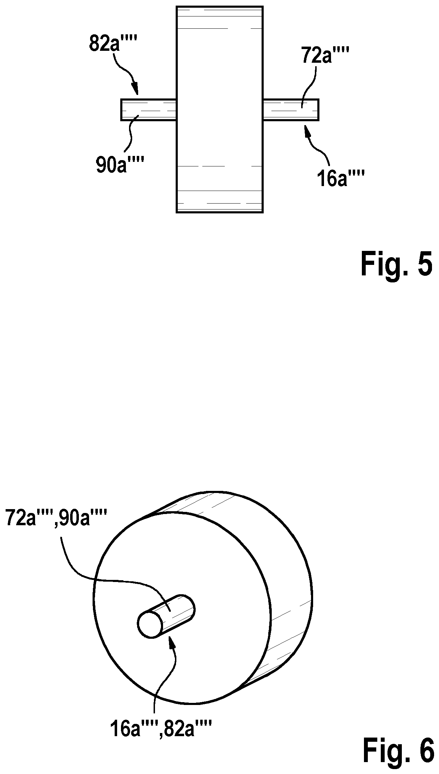

Die Figuren 5 und 6 zeigt eine weitere Variante der in der Figur 1 gezeigten Radvorrichtung. Die Radvorrichtung umfasst eine Anbindungseinheit 16aʺʺ. Die Anbindungseinheit 16aʺʺ umfasst ein Anbindungselement 72aʺʺ. Das Anbindungselement 72aʺʺ ist als Radachse ausgebildet. Ferner weist die Radvorrichtung eine Sensoreinheit 82aʺʺ auf. Die Sensoreinheit 82aʺʺ ist in die Anbindungseinheit 16aʺʺ integriert. Die Sensoreinheit 82aʺʺ umfasst einen Kraftsensor 90aʺʺ. Der Kraftsensor 90aʺʺ ist insbesondere zu einer Erfassung einer Nutzerkraft vorgesehen.

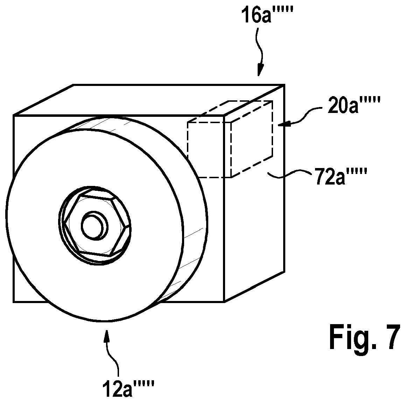

Die Figur 7 zeigt eine weitere Variante der in der Figur 1 gezeigten Radvorrichtung. Die Radvorrichtung umfasst eine Anbindungseinheit 16a‴ʺ. Die Anbindungseinheit 16a‴ʺ umfasst ein Anbindungselement 72a‴ʺ. Das Anbindungselement 72a‴ʺ ist axial einseitig der Antriebsgehäuseeinheit 12a‴ʺ angeordnet. Die Energieversorgungseinheit 20a‴ʺ ist in die Anbindungseinheit 16a‴ʺ integriert. Das Anbindungselement 72a‴ʺ umfasst hierzu einen geschlossenen Aufnahmeraum in dem die Energieversorgungseinheit 20a‴ʺ angeordnet ist.

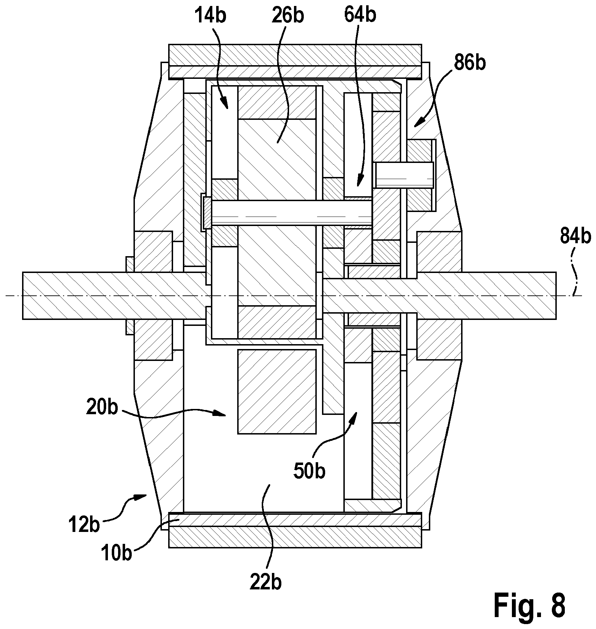

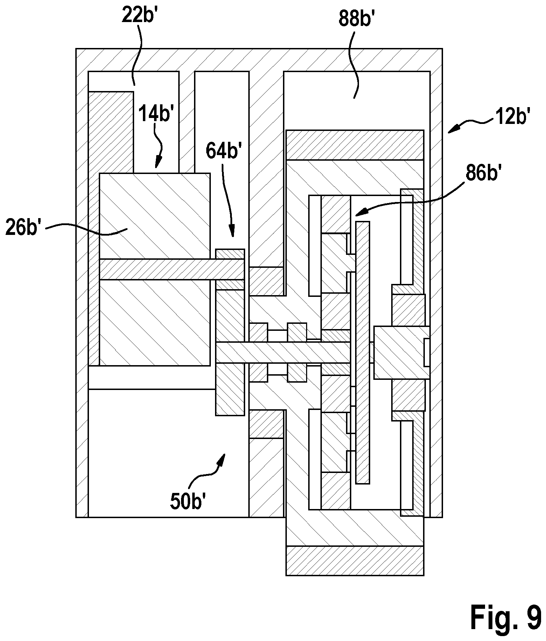

In den Figuren 8 und 9 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des anderen Ausführungsbeispiels, insbesondere der Figuren 1 bis 7, verwiesen werden kann. Zur Unterscheidung der Ausführungsbeispiele ist der Buchstabe a den Bezugszeichen des Ausführungsbeispiels in den Figuren 1 bis 7 nachgestellt. Im Ausführungsbeispiel der Figuren 8 und 9 ist der Buchstabe a durch den Buchstaben b ersetzt.

Die Figur 8 zeigt eine Radvorrichtung, insbesondere eine Smartwheelvorrichtung. Die Radvorrichtung umfasst eine Radfelge 10b. Die Radvorrichtung umfasst eine Antriebsgehäuseeinheit 12b. Die Radvorrichtung umfasst eine Antriebseinheit 14b. Die Antriebseinheit 14b ist zu einem elektrischen Antrieb der Radfelge 10b vorgesehen. Die Antriebseinheit 14b ist in die Antriebsgehäuseeinheit 12b integriert. Die Radvorrichtung umfasst eine Anbindungseinheit 16b zur lösbaren Anbindung der Antriebsgehäuseeinheit 12b an einem Fahrzeug 18b. Die Radvorrichtung umfasst eine Energieversorgungseinheit 20b. Die Energieversorgungseinheit 20b ist zu einer elektrischen Energieversorgung der Antriebseinheit 14b vorgesehen.

Die Energieversorgungseinheit 20b ist unverlierbar mit der Antriebsgehäuseeinheit 12b verbunden. Die Antriebsgehäuseeinheit 12b bildet ein Gehäuse für die Antriebseinheit 14b aus. Die Antriebsgehäuseeinheit 12b umschließt einen Motorraum 22b. Die Antriebseinheit 14b ist innerhalb des Motorraums 22b angeordnet. Der Motorraum 22b ist durch die Antriebsgehäuseeinheit 12b hermetisch abgedichtet. Die Antriebseinheit 14b umfasst einen Elektromotor 26b. Der Elektromotor 26b ist von einem elektrisch kommutierten Gleichstrommotor gebildet. Eine Leistungsskalierung erfolgt insbesondere über eine axiale Motorlänge des Elektromotors 26b und/oder zusätzliche Getriebestufen.

Im Unterschied zum ersten Ausführungsbeispiel ist der Elektromotor 26b radial versetzt zu einer Rotationsachse 84b der Radfelge 10b. Die Radvorrichtung umfasst eine Getriebeeinheit 50b. Die Getriebeeinheit 50b umfasst ein Planetengetriebe 86b. Der Elektromotor 26b ist axial versetzt zum Planetengetriebe 86b angeordnet. Ferner umfasst die Getriebeeinheit 50b ein Vorschaltgetriebe 64b. Das Vorschaltgetriebe 64b ist axial zwischen dem Elektromotor 26b und dem Planetengetriebe 86b angeordnet. Das Vorschaltgetriebe 64b und das Planetengetriebe 86b sind gemeinsam innerhalb des Motorraums 22b der Antriebsgehäuseeinheit 12b angeordnet.

In einer in der Figur 9 dargestellten Variante des zweiten Ausführungsbeispiels weist die Radvorrichtung eine Getriebeeinheit 50b' auf, die zu einer Drehmomentübertragung zwischen der Antriebseinheit 14b' und der Radfelge 10b' vorgesehen ist. Die Getriebeeinheit 50b' ist teilweise außerhalb eines Motorraums 22b' der Antriebsgehäuseeinheit 12b' angeordnet ist. Genauer gesagt sind der Elektromotor 26b' und ein Vorschaltgetriebe 64b' der Getriebeeinheit 50b' innerhalb des Motorraums 22b' angeordnet. Ein Planetengetriebe 86b' der Getriebeeinheit 50b' ist außerhalb des Motorraums 22b' innerhalb eines Getrieberaums 88b' angeordnet.

## Patentansprüche

1. Radvorrichtung, insbesondere Smartwheelvorrichtung, mit zumindest einer Radfelge (10a, 10a'; 10b), mit einer Antriebsgehäuseeinheit (12a, 12a', 12a", 12a‴; 12b), mit einer Antriebseinheit (14a; 14b, 14b'), die zu einem elektrischen Antrieb der zumindest einen Radfelge (10a, 10a'; 10b) vorgesehen ist, wobei die Antriebseinheit (14a; 14b, 14b') zumindest im Wesentlichen in die Antriebsgehäuseeinheit (12a, 12a', 12a", 12a‴; 12b) integriert ist, mit einer Anbindungseinheit (16a, 16a", 16a‴; 16b) zur lösbaren Anbindung der Antriebsgehäuseeinheit (12a, 12a', 12aʺ, 12a‴; 12b) an einem Fahrzeug (18a) und mit einer Energieversorgungseinheit (20a, 20a'; 20b), die zu einer elektrischen Energieversorgung der Antriebseinheit (14a; 14b, 14b') vorgesehen und, insbesondere unverlierbar, mit der Antriebsgehäuseeinheit (12a, 12a', 12a", 12a"'; 12b) verbunden ist, **gekennzeichnet durch.**eine Sensoreinheit (82a"), die zumindest teilweise in die Anbindungseinheit (16a") integriert ist.

2. Radvorrichtung nach Anspruch 1, **dadurch gekennzeichnet, dass** die zumindest eine Radfelge (10a, 10a'; 10b) zumindest eine Gehäusewandung der Antriebsgehäuseeinheit (12a, 12a'; 12b) ausbildet.

3. Radvorrichtung nach Anspruch 1 oder 2, **dadurch gekennzeichnet, dass** die Anbindungseinheit (16a, 16a‴) zumindest ein Anbindungselement (72a, 72a‴) umfasst, welches die Antriebsgehäuseeinheit (12a) zumindest teilweise umschließt.

4. Radvorrichtung nach einem der vorhergehenden Ansprüche, **dadurch gekennzeichnet, dass** die Anbindungseinheit (16a, 16a", 16a‴) zumindest ein plattenförmiges Anbindungselement (72a, 72a") und/oder zumindest einen Verbindungszapfen (92a‴) umfasst.

5. Radvorrichtung nach einem der vorhergehenden Ansprüche, **dadurch gekennzeichnet, dass** die Energieversorgungseinheit (20a) zumindest im Wesentlichen in die Anbindungseinheit (16a) integriert ist.

6. Radvorrichtung nach einem der Ansprüche 1 bis 5, **gekennzeichnet durch** zumindest einen auf der Radfelge (10a') angeordneten Reifen (74a'), insbesondere Luftreifen, wobei die Energieversorgungseinheit (20a') zumindest im Wesentlichen in den Reifen (74a') integriert ist.

7. Radvorrichtung nach einem der vorhergehenden Ansprüche, **gekennzeichnet durch** eine Getriebeeinheit (50b'), die zu einer Drehmomentübertragung zwischen der Antriebseinheit (14b') und der zumindest einen Radfelge (10b') vorgesehen ist, wobei die Getriebeeinheit (50b') zumindest teilweise außerhalb eines Motorraums (22b') der Antriebsgehäuseeinheit (12b') angeordnet ist.

8. Radvorrichtung nach einem der vorhergehenden Ansprüche, **dadurch gekennzeichnet, dass** die zumindest eine Radfelge (10a) einstückig mit zumindest einer Raddeckelwandung (30a, 32a) der Antriebsgehäuseeinheit (12a) ausgebildet ist.

9. Fahrzeug (18a) mit zumindest einer Radvorrichtung nach einem der vorhergehenden Ansprüche.

## Claims

1. Wheel device, in particular smart wheel device, having at least one wheel rim (10a, 10a'; 10b), having a drive housing unit (12a, 12a', 12aʺ, 12a‴; 12b), having a drive unit (14a; 14b, 14b') which is provided for electrically driving the at least one wheel rim (10a, 10a'; 10b), wherein the drive unit (14a; 14b, 14b') is at least substantially integrated into the drive housing unit (12a, 12a', 12aʺ, 12a‴; 12b), having a connecting unit (16a, 16aʺ, 16a‴; 16b) for detachably connecting the drive housing unit (12a, 12a', 12aʺ, 12a‴; 12b) to a vehicle (18a), and having a power supply unit (20a, 20a'; 20b) which is provided for supplying electrical power to the drive unit (14a; 14b, 14b') and is connected, in particular non-releasably, to the drive housing unit (12a, 12a', 12aʺ, 12a‴; 12b), **characterized by** a sensor unit (82aʺ) which is at least partially integrated into the connecting unit (16aʺ).

2. Wheel device according to Claim 1, **characterized in that** the at least one wheel rim (10a, 10a'; 10b) forms at least one housing wall of the drive housing unit (12a, 12a'; 12b).

3. Wheel device according to Claim 1 or 2, **characterized in that** the connecting unit (16a, 16a‴) comprises at least one connecting element (72a, 72a‴) which at least partially surrounds the drive housing unit (12a) .

4. Wheel device according to one of the preceding claims, **characterized in that** the connecting unit (16a, 16aʺ, 16a‴) comprises at least one plate-like connecting element (72a, 72aʺ) and/or at least one connecting pin (92a‴).

5. Wheel device according to one of the preceding claims, **characterized in that** the power supply unit (20a) is at least substantially integrated into the connecting unit (16a).

6. Wheel device according to one of Claims 1 to 5, **characterized by** at least one tyre (74a'), in particular pneumatic tyre, which is arranged on the wheel rim (10a'), wherein the power supply unit (20a') is at least substantially integrated into the tyre (74a').

7. Wheel device according to one of the preceding claims, **characterized by** a transmission unit (50b') which is provided for transmitting torque between the drive unit (14b') and the at least one wheel rim (10b'), wherein the transmission unit (50b') is arranged at least partially outside a motor compartment (22b') of the drive housing unit (12b').

8. Wheel device according to one of the preceding claims, **characterized in that** the at least one wheel rim (10a) is formed in one piece with at least one wheel cover wall (30a, 32a) of the drive housing unit (12a).

9. Vehicle (18a) comprising at least one wheel device according to one of the preceding claims.

## Revendications

1. Dispositif de roue, notamment dispositif de roue intelligente, comprenant au moins une jante de roue (10a, 10a' ; 10b), comprenant une unité de boîtier d'entraînement (12a, 12a', 12aʺ, 12a‴ ; 12b), comprenant une unité d'entraînement (14a ; 14b, 14b'), qui est prévue pour un entraînement électrique de l'au moins une jante de roue (10a, 10a' ; 10b), l'unité d'entraînement (14a ; 14b, 14b') étant au moins essentiellement intégrée dans l'unité de boîtier d'entraînement (12a, 12a', 12aʺ, 12a‴ ; 12b), comprenant une unité de raccordement (16a, 16aʺ, 16a‴ ; 16b) pour le raccordement détachable de l'unité de boîtier d'entraînement (12a, 12a', 12aʺ, 12a‴ ; 12b) à un véhicule (18a) et comprenant une unité d'alimentation en énergie (20a, 20a' ; 20b), qui est prévue pour une alimentation en énergie électrique de l'unité d'entraînement (14a ; 14b, 14b') et qui est reliée, notamment de manière imperdable, à l'unité de boîtier d'entraînement (12a, 12a', 12aʺ, 12a‴ ; 12b), **caractérisé par** une unité de détection (82aʺ) qui est au moins partiellement intégrée dans l'unité de raccordement (16aʺ).

2. Dispositif de roue selon la revendication 1, **caractérisé en ce que** l'au moins une jante de roue (10a, 10a' ; 10b) forme au moins une paroi de boîtier de l'unité de boîtier d'entraînement (12a, 12a' ; 12b).

3. Dispositif de roue selon la revendication 1 ou 2, **caractérisé en ce que** l'unité de raccordement (16a, 16a‴) comprend au moins un élément de raccordement (72a, 72a‴) qui entoure au moins partiellement l'unité de boîtier d'entraînement (12a).

4. Dispositif de roue selon l'une quelconque des revendications précédentes, **caractérisé en ce que** l'unité de raccordement (16a, 16aʺ, 16a‴) comprend au moins un élément de raccordement en forme de plaque (72a, 72aʺ) et/ou au moins un tenon de liaison (92a‴).

5. Dispositif de roue selon l'une quelconque des revendications précédentes, **caractérisé en ce que** l'unité d'alimentation en énergie (20a) est au moins essentiellement intégrée dans l'unité de raccordement (16a) .

6. Dispositif de roue selon l'une quelconque des revendications 1 à 5, **caractérisé par** au moins un pneu (74a'), notamment un pneu à air, agencé sur la jante de roue (10a'), l'unité d'alimentation en énergie (20a') étant au moins essentiellement intégrée dans le pneu (74a').

7. Dispositif de roue selon l'une quelconque des revendications précédentes, **caractérisé par** une unité de transmission (50b') qui est prévue pour une transmission de couple entre l'unité d'entraînement (14b') et l'au moins une jante de roue (10b'), l'unité de transmission (50b') étant agencée au moins partiellement à l'extérieur d'un compartiment moteur (22b') de l'unité de boîtier d'entraînement (12b').

8. Dispositif de roue selon l'une quelconque des revendications précédentes, **caractérisé en ce que** l'au moins une jante de roue (10a) est configurée d'un seul tenant avec au moins une paroi de couvercle de roue (30a, 32a) de l'unité de boîtier d'entraînement (12a).

9. Véhicule (18a) comprenant au moins un dispositif de roue selon l'une quelconque des revendications précédentes.
